# EUROPÄISCHE PATENTSCHRIFT

(11) **EP 1 258 464 B1**
(45) Veröffentlichungstag und Bekanntmachung des Hinweises auf die Patenterteilung: **04.08.2004**
(21) Anmeldenummer: 02009335.7
(22) Anmeldetag: 02.05.2002
(51) Int. Cl.: C04B 24/26

(54) **Verwendung einer Pulverzusammensetzung als rheologisches Additiv mit verdickender Wirkung**
Use of a powder composition as rheologic additive with viscosifying effect
Utilisation d'une composition pulvérulente comme additif rhéologique à effet viscosifiant

(30) Priorität: 10.05.2001 DE 10122629
(43) Veröffentlichungstag der Anmeldung: 20.11.2002
(73) Patentinhaber: Wacker-Chemie GmbH, 81737 München (DE)
(72) Erfinder: Bacher, Andreas, Dr., 84489 Burghausen (DE); Bauer, Werner, Dr., 84543 Winhöring (DE); Dietrich, Ulf, Dr., 84489 Burghausen (DE); Kayser, Bernd, Dr., 85579 Neubiberg (DE); Schmitz, Marion, Dr., 84489 Burghausen (DE); Zeh, Harald, Dr., 84489 Burghausen (DE); Mayer, Theo, Dr., 84387 Julbach (DE)
(74) Vertreter: Schuderer, Michael, Dr.

(56) Entgegenhaltungen:
- WO-A-97/26295
- WO-A-99/62838
- DE-A- 10 049 127
- DE-A- 19 733 166
- GB-A- 2 279 655
- US-A- 5 519 084
- US-A- 6 127 483

## Beschreibung

Die Erfindung betrifft die Verwendung einer Pulverzusammensetzung aus (Meth)acrylatpolymer, Dispergiermittel und Redispersionspulver als rheologisches Additiv mit verdickender Wirkung, insbesondere in zementären Baustoffmassen.

Rheologische Additive werden in Baustoffformulierungen standardmäßig eingesetzt. Sie dienen hauptsächlich zur Verbesserung der Verarbeitungseigenschaften und des Wasserrückhaltevermögens. Weiterhin kann man mit solchen Zusatzstoffen das Eigenschaftsprofil des Baustoffes auf ein gewünschtes Anwendungsprofil (Strukturviskosität, Thixotropie)) angleichen. Als verdickende Additive werden hauptsächlich wässerlösliche Polymere auf Basis von Celluloseethern, beispielsweise Methylcellulose, Hydroxyethylcellulosen, Methylhydroxyethylcellulosen, Hydroxypropylcellulosen und Carboxymethylcellulosen, eingesetzt. Obwohl Verdicker auf Basis von Celluloseethern nur in geringen Mengen, beispielsweise in zementären Fliesenklebern, eingesetzt werden, stellen solche Verdicker wegen der aufwendigen Reinigungsschritte bei deren Herstellung den zweitgrößten Kostenfaktor bei zementären Fliesenkleber dar. Es besteht folglich ein Bedarf an kostengünstiger zugänglichen rheologischen Additiven.

Im allgemeinen konkurrieren die Celluloseether als Verdicker insbesondere mit vollsynthetischen Polymeren wie Polyurethan-Assoziativverdickern, Polyacrylaten, Polyiminen, Polyamiden, sowie natürlichen Polymeren wie Agar-Agar, Tragant, Carageen, Gummiarabicum, Alginate, Stärke, Gelatine und Pektin. In Baustoffmassen, insbesondere zementären Systemen, welche durch deren hohen pH-Wert und hohem Elektrolytgehalt gekennzeichnet sind, können diese Alternativen allerdings nicht zufriedenstellen. In diesen Anwendungen gibt es zu Celluloseethern bisher keine Alternativen, die auch nur annähernd akzeptables Verarbeitungsverhalten ergeben.

Aus der EP-A 504870 ist eine Verdickungsmittel-Kombination für Baustoffprodukte bekannt, welche neben natürlichen Polymeren wie Celluloseethern noch Salze von vernetzten, gegebenenfalls mit Stärke gepfropften, Polyacrylaten (sogenannte Superabsorber) und Dispergiermittel auf Basis von Formaldehyd-Sulfonsäure-Kondensationsprodukten enthält.

Die WO-A 99/62838 beschreibt Zementmischungen mit einer Additivkombination aus Ligninsulfonat und einem Copolymer aus (Meth)acrylsäure, (Meth)acrylsäureester und Hydroxyalkyl(meth)acrylsäureester zur Verbesserung der Absitzneigung der Zementmassen. In der GB-A 2279655 wird vorgeschlagen zur Verbesserung der Fließfähigkeit und des Absitzverhaltens von Zementzusammensetzungen eine wässrige Lösung eines Acrylsäure-Methylmethacrylat-Copolymers und Ligninsulfonat zuzugeben.

Die US-A 6165262 beschreibt die Zugabe von pulverförmigen Methylacrylat-(Meth)acrylsäure-Copolymeren zusammen mit "water reducing agents" wie Ligninsulfonat zu Zementmassen.

Der Erfindung lag die Aufgabe zugrunde, ein Additiv insbesondere für zementäre Baustoffmassen zu entwickeln, mit dem eine verdickende Wirkung erhalten wird, ohne daß die Verarbeitungseigenschaften oder die mechanischen Festigkeiten negativ beeinflußt werden.

Gegenstand der Erfindung ist die Verwendung einer Pulverzusammensetzung als rheologisches Additiv mit verdickender Wirkung in zementären oder zementfreien Baustoffmassen, dadurch gekennzeichnet, daß die Pulverzusammensetzung
a) ein Mischpolymerisat aus (Meth)acrylsäure und (Meth)acrylsäureester,
b) ein Dispergiermittel,
c) ein in Wasser redispergierbares Polymerpulver
enthält.

Geeignete Mischpolymerisate a) enthalten Methacrylsäureester und Acrylsäureester von Alkoholen mit 1 bis 25 C-Atomen oder von Alkoholen mit (Poly)oxyalkylen-Einheiten, sowie Acrylsäure und/oder Methacrylsäure. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Bevorzugt sind auch die Ester der Acrylsäure und Methacrylsäure mit (Poly)oxyalkylen-Einheiten mit 1 bis 50 Oxyalkyleneinheiten mit jeweils 2 bis 8 C-Atomen im Esterrest, insbesondere (Poly)oxyethylen-, (Poly)oxypropylen- und Poly(oxyethylen) (oxypropylen)-Reste mit jeweils 1 bis 20 Oxyalkyleneinheiten in der Estergruppe.

Die Zusammensetzung der Mischpolymerisate a) wird so gewählt, daß diese wasserlöslich sind, wobei unter wasserlöslich zu verstehen ist, daß die Löslichkeit bei Normalbedingungen mindestens 10 g Mischpolymerisat a) in 1000 g Wasser beträgt. Bevorzugte Mischpolymerisate enthalten 30 bis 85 Gew.-%, vorzugsweise 40 bis 70 Gew.-%, (Meth)acrylsäureester und 15 bis 70 Gew.-%, vorzugsweise 30 bis 60 Gew.-%, Acrylsäure und/oder Methacrylsäure, jeweils bezogen auf das Gesamtgewicht des Mischpolymerisats. Das Molekulargewicht Mw (Gewichtsmittel) des Mischpolymerisats a) beträgt > 20000, vorzugsweise 25000 bis 500000, besonders bevorzugt 50000 bis 350000.

Die Herstellung der Mischpolymerisate a) kann in bekannter Weise, beispielweise mittels Lösungspolymerisation, Suspensionspolymerisation und Emulsionspolymerisation erfolgen. Anschließend werden die Polymerisate mit üblichen Methoden, beispielsweise Sprühtrocknung, getrocknet.

Geeignete Dispergiermittel b) sind alle handelsüblichen Dispergiermittel wie Ligninsulfonate, Polycarboxylate, Aminosulfonsäuren, Naphthalinsulfonsäure-Formaldehyd-Kondensate, Melaminsulfonsäure-Formaldehyd-Kondensate und Hydroxycarboxylsäuren und deren Metallsalze, beispielsweise deren Alkälimetallsalze und Erdalkalimetallsalze.

Geeignete in Wasser redispergierbare Polymerpulver c) sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide. Es können auch Gemische der genannten Polymerisate eingesetzt werden.

Gegebenenfalls können die Polymerisate noch 0.1 bis 10 Gew.-%, bezogen auf das Gesamtgewicht des Polymerisats, funktionelle Comonomereinheiten enthalten aus der Gruppe der ethylenisch ungesättigten Carbonsäureamide wie (Meth)Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether.

Als Polymerisate werden die nachstehend aufgeführten bevorzugt, wobei sich die Angaben in Gewichtsprozent, gegebenenfalls mit dem Anteil an funktionellen Comonomereinheiten, auf 100 Gew.-% aufaddieren:

Bevorzugt werden aus der Gruppe der Vinylester-Polymerisate Vinylacetat-Polymerisate, Vinylacetat-Ethylen-Copolymere mit einem Ethylengehalt von 1 bis 60 Gew.-%; Vinylester-Ethylen-Vinylchlorid-Copolymere mit einem Ethylengehalt von 1 bis 40 Gew.-% und einem Vinylchlorid-Gehalt von 20 bis 90 Gew.-%; Vinylacetat-Copolymere mit 1 bis 50 Gew.-% eines oder mehrerer copolymerisierbarer Vinylester wie Vinyllaurat, Vinylpivalat, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew.-% Ethylen enthalten; Vinylacetat-Acrylsäureester-Copolymerisate mit 1 bis 60 Gew.-% Acrylsäureester, insbesonders n-Butylacrylat oder 2-Ethylhexylacrylat, welche gegebenenfalls noch 1 bis 40 Gew.-% Ethylen enthalten.

Bevorzugt werden aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat, Copolymerisate von Methylmethacrylat mit 1,3-Butadien; und aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere. Aus der Gruppe der Styrol-Polymerisate werden Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-% bevorzugt.

Die Mengenverhältnisse der Komponenten des pulverförmigen Additivs betragen 10 bis 100 Gew.-Teile Komponente a), 0.1 bis 50 Gew.-Teile Komponente b), 50 bis 5000 Gew.-Teile Komponente c). Vorzugsweise 75 bis 95 Gew.-Teile Komponente a), 5 bis 25 Gew.-Teile Komponente b) und 100 bis 400 Gew.-Teile Komponente c).

Zur Modifizierung der zementären oder zementfreien Massen kann das rheologische Additiv als Pulvermischung zugegeben werden. Die Komponenten a), b) und c) können aber auch einzeln zugegeben werden. Wird ein Gemisch eingesetzt, so kann dessen Herstellung vorzugsweise so erfolgen, daß während des Herstellprozesses des Mischpolymerisats a), vor oder während dessen Trocknens, das Dispergiermittel b) zugegeben wird, und das Redispersionspulver c) in einem separaten Mischschritt zugemischt wird. Das Dispergiermittel b) kann aber auch in einem separaten Mischschritt zugemischt werden. Besonders bevorzugt werden die Komponenten a) und b) zusammen mit der dem Redispersionspulver c) zugrundeliegenden wässrigen Dispersion gemischt und anschließend getrocknet, beispielsweise sprühgetrocknet.

Die Pulverzusammensetzung eignet sich als rheologisches Additiv in hydraulisch abbindenden, zementären und zementfreien (gips- oder kalkhaltigen) Massen. Bevorzugt wird die Pulverzusammensetzung als rheologisches Additiv in Trockenmörteln verwendet. Besonders bevorzugt ist die Verwendung in Trockenmörteln für Bauklebemittel wie Fliesenkleber und Klebemittel zur Verklebung von Wärmedämmplatten und Schallschutzplatten. Weitere besonders bevorzugten Verwendungen sind die in Trockenmörteln für Armierungsmassen für Wärmedämmverbundsysteme, für Spachtelmassen, Dichtungsschlämme und Putze. Bevorzugt ist auch die Verwendung in gipshaltigen Zusammensetzungen wie Gipsputzen und Gipsspachtelmassen.

Typische Rezepturen für Trockenmörtel enthalten
5 bis 80 Gew.-Teile hydraulisches Bindemittel, vorzugsweise Zement oder Gips oder Kalk,
5 bis 80 Gew.-Teile Füllstoffe, wie Quarzsand, Calciumcarbonat, Aluminiumsilkate, Talkum oder Glimmer,
0.1 bis 1 Gew.-Teile des (Meth)acrylat-Mischpolymerisats a),
0.001 bis 0.5 Gew.-Teile des Dispergiermittels b),
0.5 bis 50 Gew.-Teile des Redispersionspulvers c), sowie gegebenenfalls weitere Zusatzstoffe.

Beispiele für weitere Zusatzstoffe sind Beschleuniger, Verzögerer, Fasserfüllstoffe aus Cellulosefaser, Mineralfaser, Polymerfaser, Entschäumer, Hydrophobierungsmittel, Luftporenbildner und gegebenenfalls weitere Verdickungsmittel wie Celluloseether, Polyurethan-Assoziativverdicker, Polyimine, Polyamide, Agar-Agar, Tragant, Carageen, Gummiarabicum, Alginate, Stärke, Gelatine und Pektin.

Rheologische Additive auf Basis von (Meth)acrylatpolymerisaten konnten bisher in zementären Trockenmörteln nur unter erheblichen Qualitätseinbußen eingesetzt werden: Unzureichende Stell mitteleigenschaften und Zementabbindeverhalten. Dies führte zu unbefriedigenden Verarbeitungseigenschaften wie der schlechter Benetzung des Untergrunds mit den zementären Massen, und ungenügender Geschmeidigkeit der zementären Massen Fliesenklebers ist ungenügend. Mit der erfindungsgemäßen Kombination werden rheologische Additive auf der Basis von (Meth)acrylat-Polymerisaten zugänglich, welche im Gegensatz zu den bisher bekannten rheologischen Additiven auf (Meth)acrylatbasis zu sehr gut verarbeitbaren zementären Massen mit ausgezeichneten mechanischen Eigenschaften führen.

Die nachfolgenden Beispiele dienen der weiteren Erläuterung der Erfindung:

### Beispiel 1:

In einem Zweiliter-Reaktionsgefäß, ausgerüstet mit Rückflußkühler, Rührwerk und Zulaufgefäß, wurden bei 20°C 0.43 g einer 20 %-igen wässrigen Melonlösung in 580 ml Wasser gelöst. Anschließend wurde auf 80°C hochgeheizt. Bei Erreichen von 50°C wurden unter Rühren in diese Lösung 5 Gew.-% einer Emulsion bestehend aus 518 ml Wasser, 43 g einer 30 %-igen wässrigen Lösung von Poly(oxyethylen)isotridecylsulfat, 403 g Methacrylsäure, 86.3g Butylacrylat und 388.3 g Ethylacrylat zugegeben. Die Emulsion wurde bei Erreichen von 80°C mit 2.6 g Ammoniumpersulfat versetzt. 10 Minuten nach Reaktionsbeginn wurde eine Lösung bestehend aus 1.73 g Ammoniumpersulfat und 118 g Wasser innerhalb 6 Stunden und die restliche Monomervoremulsion innerhalb 5 Stunden zudosiert.Nach Zulaufende wurde der Ansatz auf Raumtemperatur abgekühlt.
Die Polymeremulsion wurde gemeinsam mit 12 Gew.-% Calcium-Ligninsulfonat, bezogen auf Polymer, und mit einem Redispersionspulver (Styrol-Butylacrylat-Copolymer) im Verhältnis (a+b) : c von 0.6 : 1.5 sprühgetrocknet.

### Beispiel 2:

Es wurde analog Beispiel 1 vorgegangen, jedoch wurde die Polymerdispersion ohne Redispersionspulver sprühgetrocknet.

### Beispiel 3:

Es wurde analog Beispiel 1 vorgegangen, jedoch wurde anstelle von Methyacrylsäure Acrylsäure eingesetzt.

### Beispiel 4:

Es wurde analog Beispiel 1 vorgegangen, jedoch wurde anstelle von Butylacrylat 2-Ethylhexylacrylat verwendet. Die Polymeremulsion wurde gemeinsam mit 12 Gew.-% Calcium-Ligninsulfonat, bezogen auf Polymer, sprühgetrocknet.

### Beispiel 5:

Es wurde analog Beispiel 1 vorgegangen, jedoch wurden anstelle von 12 Gew.-% Ca-Ligninsulfonat 8 Gew.-% Melaminsulfonsäure-Formaldehyd-Kondensat, jeweils bezogen auf Polymer a), eingesetzt.

### Vergleichsbeispiel 1:

Es wurde analog Beispiel 1 vorgegangen, jedoch wurde die Polymeremulsion ohne Ca-Ligninsulfonat getrocknet.

### Vergleichsbeispiel 2:

Es wurde analog Beispiel 2 vorgegangen, jedoch wurde die Polymeremulsion ohne Ca-Ligninsulfonat getrocknet.

### Vergleichsbeispiel 3:

Es wurde analog Beispiel 3 vorgegangen, jedoch wurde die Polymeremulsion ohne Ca-Ligninsulfonat getrocknet.

### Vergleichsbeispiel 4:

Es wurde analog Beispiel 4 vorgegangen, jedoch wurde die Polymeremulsion ohne Ca-Ligninsulfonat getrocknet.

### Vergleichsbeispiel 5:

Es wurde analog Beispiel 2 vorgegangen, mit dem Unterschied, daß in der Trockenmörtelformulierung kein Redispersionspulver c) eingesetzt wurde.

Die gemäß der Beispiele 2 bzw. Vergleichsbeispiele 2 und 5 erhaltenen Pulver aus den Komponenten a) und b) wurden zusammen mit der Redispersionspulver-Komponente c) zu der nachfolgenden Trockenmörtelmischung hinzugefügt.

Die Prüfung der Pulverzusammensetzungen wurde in folgender Formulierung durchgeführt:
55.2 Gew.-Teile Quarzsand Nr.9a (0.1-0.4 mm),
43.0 Gew.-Teile Zement 42.5 (Rohrdorfer),
1.5 Gew.-Teile Redispersionspulver c) (Styrol-Butylacrylat),
0.6 Gew.-Teile Pulvermischung a/b.

Die Trockenmischung wurde mit der in der Tabelle 1 angegebenen Menge Wasser versetzt, die Mischung 5 Minuten stehen gelassen und danach der Prüfung unterzogen.

### Testmethoden:

Die Testergebnisse sind in Tabelle 1 zusammengefasst.

### Bestimmung der Geschmeidigkeit (GK):

Die Geschmeidigkeit der Mischung wurde qualitativ mittels optischer Beurteilung bestimmt. Die Bewertung erfolgte in einer Notenskala von 1 bis 6, wobei die Note 1 das Optimum darstellt.

### Bestimmung der Benetzung (BN) :

Die Benetzung einer Fliese während des Aufziehens des Mörtels wurde qualitativ mittels optischer Beurteilung bestimmt. Die Bewertung erfolgte in einer Notenskala von 1 bis 6, wobei die Note 1 das Optimum darstellt.

### Bestimmung der Stegausbildung (SA):

Die Stegausbildung wurde qualitativ mittels optischer Beurteilung bestimmt. Die Bewertung erfolgte in einer Notenskala von 1 bis 6, wobei die Note 1 das Optimum darstellt.

### Bestimmung des Nachdickens (ND) :

Das Nachdicken (Viskositätsanstieg) wurde eine Stunde nach der Herstellung des Fliesenklebers qualitativ mittels optischer Beurteilung bestimmt. Die Bewertung erfolgte in einer Notenskala von 1 bis 6; wobei die Note 1 das Optimum darstellt

### Bestimmung des Aufbruchs (AB):

Der Aufbruch wurde von einer nach 10 Minuten in den Mörtel eingelegten Fliese (5 x 5 cm) nach 60 Minuten bestimmt durch Ausmessen der Benetzung der Fliesenrückseite mit Mörtel.

### Bestimmung der Standfestigkeit (SF):

Zum Abrutschtest (Standfestigkeit) wurde eine eingelegte Fliese (15 x 15 cm) senkrecht von oben mit einem bestimmten Gewicht für jeweils 30 Sekunden belastet.

### Bestimmung der Redispergierbarkeit (RD):

Die Redispergierbarkeit wurde mittels Messung der Partikelgrößenverteilung mit dem Particel Size Analyser von Coulter und Vergleich der Verteilung der Ausgangsdispersion mit der Verteilung der redispergierten,Pulver. Es wurden jeweils 50 %-ige wässrige Dispersionen hergestellt und die Partikelgrößenverteilung der Redispersion jeweils 30 s bzw. 2 Minuten nach der Redispersion bestimmt. Die Bewertung erfolgte qualitativ mit einer Notenskala von 1 bis 6, wobei 1 das Optimum darstellt.

**Tabelle 1:**

| Bsp. | H₂O [g] | GK | BN | SA | ND | RD 30 s | RD 2min | AB [%] | SF [g] |
|---|---|---|---|---|---|---|---|---|---|
| Bsp.1 | 30.1 | 1 | 2 | 2.5 | 2 | 2 | 1 | 80 | 1000 |
| Bsp.2 | 30.0 | 2 | 2.5 | 2.5 | 3 | 4 | 2 | 80 | 1000 |
| Bsp.3 | 27.4 | 1 | 2.5 | 2 | 2.5 | 2 | 1 | 85 | 800 |
| Bsp.4 | 27.4 | 1 | 2 | 2 | 2 | 2 | 1 | 90 | 1000 |
| Bsp.5 | 30.8 | 1 | 2 | 2.5 | 1.5 | 1.5 | 1 | 95 | 800 |
| Vbsp.1 | 30.1 | 4 | 4 | 3.5 | 6 | 4 | 2 | 70 | 600 |
| Vbsp.2 | 30.0 | 4 | 4 | 3.5 | 6 | 5 | 4 | 70 | 600 |
| Vbsp.3 | 28.1 | 3 | 3.5 | 3 | 5 | 2 | 1 | 60 | 400 |
| Vbsp.4 | 27.4 | 4 | 4.5 | 3.5 | 5 | 4 | 2 | 65 | 800 |
| Vbsp.5 | 28.0 | 3 | 2.5 | 3 | 5 | - | - | 70 | 800 |

## Patentansprüche

1. Verwendung einer Pulverzusammensetzung als rheologisches Additiv mit verdickender Wirkung in zementären oder zementfreien Baustoffmassen, **dadurch gekennzeichnet, daß** die Pulverzusammensetzung
a) ein Mischpolymerisat aus (Meth)acrylsäure und (Meth)acrylsäureester,
b) ein Dispergiermittel,
c) ein in Wasser redispergierbare Polymerpulver
enthält.

2. Verwendung nach Anspruch 1, **dadurch gekennzeichnet, daß** das Mischpolymerisat a) Methacrylsäureester und Acrylsäureester von Alkoholen mit 1 bis 25 C-Atomen oder von Alkoholen mit (Poly)oxyalkylen-Einheiten, sowie Acrylsäure und/oder Methacrylsäure enthält.

3. Verwendung nach Anspruch 2, **dadurch gekennzeichnet, daß** das Mischpolymerisat a) 30 bis 85 Gew.-% Meth)acrylsäureester und 15 bis 70 Gew.-%, Acrylsäure und/oder Methacrylsäure, jeweils bezogen auf das Gesamtgewicht des Mischpolymerisats, enthält.

4. Verwendung nach Anspruch 1 bis 3, **dadurch gekennzeichnet, daß** als Dispergiermittel b) ein oder mehrere aus der Gruppe umfassend Ligninsulfonate, Polycarboxylate, Aminosulfonsäuren, Naphthalinsulfonsäure-Formaldehyd-Kondensate, Melaminsulfonsäure-Formaldehyd-Kondensate und _{H}ydroxycarboxylsäuren und deren Metallsalze, verwendet werden.

5. Verwendung nach Anspruch 1 bis 4, **dadurch gekennzeichnet, daß** als in Wasser redispergierbare Polymerpulver c) solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide, oder deren Gemische verwendet werden.

6. Verwendung nach Anspruch 1 bis 5, **dadurch gekennzeichnet, daß** die Mengenverhältnisse der Komponenten des pulverförmigen Additivs 10 bis 100 Gew.-Teile Komponente a), 0.1 bis 50 Gew.-Teile Komponente b), 50 bis 5000 Gew.-Teile Komponente c) betragen.

7. Verwendung nach Anspruch 1 bis 6 als rheologisches Additiv mit verdickender Wirkung in Trockenmörteln.

8. Verwendung nach Anspruch 7 in Trockenmörteln für Baukleber wie Fliesenkleber und Klebemittel zur Verklebung von Wärmedämmplatten und Schallschutzplatten.

9. Verwendung nach Anspruch 7 in Trockenmörteln für Armierungsmassen für Wärmedämmverbundsysteme, für Spachtelmassen, Dichtungsschlämme und Putze.

10. Verwendung nach Anspruch 7 bis 9, **dadurch gekennzeichnet, daß** der Trockenmörtel
5 bis 80 Gew.-Teile hydraulisches Bindemittel,
5 bis 80 Gew.-Teile Füllstoffe
0.1 bis 1 Gew.-Teile des (Meth)acrylat-Mischpolymers a),
0.001 bis 0.5 Gew.-Teile des Dispergiermittels b),
0.5 bis 50 Gew.-Teile des Redispersionspulvers c),
sowie gegebenenfalls weitere Zusatzstoffe enthält.

11. Verwendung nach Anspruch 10, **dadurch gekennzeichnet, daß** der Trockenmörtel als hydraulisches Bindemittel Zement oder Gips oder Kalk enthält.

## Claims

1. Use of a powder composition as rheological additive having a thickening action in cement-containing or cement-free building material compositions, **characterized in that** the powder composition comprises
a) a copolymer of (meth)acrylic acid and (meth)acrylic esters,
b) a dispersant,
c) a polymer powder which is redispersible in water.

2. Use according to Claim 1, **characterized in that** the copolymer a) comprises methacrylic esters and acrylic esters of alcohols having from 1 to 25 carbon atoms or of alcohols containing (poly)oxyalkylene units, and also acrylic acid and/or methacrylic acid.

3. Use according to Claim 2, **characterized in that** the copolymer a) comprises from 30 to 85% by weight of (meth)acrylic esters and from 15 to 70% by weight of acrylic acid and/or methacrylic acid, in each case based on the total weight of the copolymer.

4. Use according to any of Claims 1 to 3, **characterized in that** the dispersant b) used comprises one or more dispersants selected from the group consisting of lignosulphonates, polycarboxylates, aminosulphonic acids, naphthalenesulphonic acid-formaldehyde condensates, melaminesulphonic acid-formaldehyde condensates and hydroxycarboxylic acids and their metal salts.

5. Use according to any of Claims 1 to 4, **characterized in that** the polymer powder which is redispersible in water c) used is a powder based on one or more monomers selected from the group consisting of vinyl esters of unbranched or branched alkylcarboxylic acids having from 1 to 15 carbon atoms, methacrylic esters and acrylic esters of alcohols having from 1 to 10 carbon atoms, vinylaromatics, olefins, dienes and vinyl halides and mixtures thereof.

6. Use according to any of Claims 1 to 5, **characterized in that** the ratios of the components of the pulverulent additive are from 10 to 100 parts by weight of component a), from 0.1 to 50 parts by weight of component b) and from 50 to 5000 parts by weight of component c).

7. Use according to any of Claims 1 to 6 as rheological additive having a thickening action in dry mortars.

8. Use according to Claim 7 in dry mortars for building adhesives such as tile adhesives and adhesives for bonding thermal insulation boards and acoustic insulation boards.

9. Use according to Claim 7 in dry mortars for reinforcing compositions for composite thermal insulation systems, for knifing fillers, sealing slurries and plasters and renders.

10. Use according to any of Claims 7 to 9, **characterized in that** the dry mortar comprises
from 5 to 80 parts by weight of hydraulic binder,
from 5 to 80 parts by weight of fillers,
from 0.1 to 1 part by weight of the (meth)acrylate copolymer a),
from 0.001 to 0.5 part by weight of the dispersant b),
from 0.5 to 50 parts by weight of the redispersion powder c),
and, if desired, further additives.

11. Use according to Claim 10, **characterized in that** the dry mortar comprises cement or plaster of Paris or lime as hydraulic binder.

## Revendications

1. Utilisation d'une composition pulvérulente en tant qu'additif rhéologique à effet viscosifiant dans des compositions de matériaux de construction cimentaires ou sans ciment, **caractérisée en ce que** la composition pulvérulente comprend :
a) un copolymère d'acide (méth)acrylique et d'ester (méth)acrylique,
b) un dispersant,
c) une poudre polymère redispersable dans l'eau.

2. Utilisation selon la revendication 1, **caractérisée en ce que** le copolymère a) comprend des esters méthacryliques et des esters acryliques d'alcools ayant de 1 à 25 atomes de carbone ou d'alcools renfermant des motifs (poly)oxyalkylène, ainsi que l'acide acrylique et/ou l'acide méthacrylique.

3. Utilisation selon la revendication 2, **caractérisée en ce que** le copolymère a) comprend de 30 à 85 % en poids d'esters (méth)acryliques et de 15 à 70 % en poids d'acide acrylique et/ou d'acide méthacrylique, dans chaque cas par rapport au poids total du copolymère.

4. Utilisation selon les revendications 1 à 3, **caractérisée en ce que** l'on utilise, en tant que dispersant b), l'un ou plusieurs parmi le groupe constitué de lignosulfonates, de polycarboxylates, d'acides aminosulfoniques, de produits de condensation d'acide naphtalène sulfonique/formaldéhyde, de produits de condensation d'acide mélaminesulfonique/formaldéhyde et d'acides hydroxycarboxyliques et de leurs sels métalliques.

5. Utilisation selon les revendications 1 à 4, **caractérisée en ce que** l'on utilise, en tant que poudre polymère redispersable dans l'eau c), celles à base d'un ou de plusieurs monomères parmi le groupe constitué d'esters vinyliques d'acides alkylcarboxyliques non ramifiés ou ramifiés ayant de 1 à 15 atomes de carbone, d'esters méthacryliques et d'esters acryliques d'alcools ayant de 1 à 10 atomes de carbone, de composés vinylaromatiques, d'oléfines, de diènes et d'halogénures de vinyle, ou de leurs mélanges.

6. Utilisation selon les revendications 1 à 5, **caractérisée en ce que** les proportions des composants de l'additif pulvérulent sont de 10 à 100 parties en poids du composant a), de 0,1 à 50 parties en poids du composant b), et de 50 à 5 000 parties en poids du composant c).

7. Utilisation selon les revendications 1 à 6 en tant qu'additif rhéologique à effet viscosifiant dans des mortiers secs.

8. Utilisation selon la revendication 7 dans des mortiers secs pour des adhésifs de construction tels que des adhésifs pour carrelage et des adhésifs pour l'adhésion de panneaux d'isolation thermique et de panneaux d'isolation acoustique.

9. Utilisation selon la revendication 7 dans des mortiers secs pour des compositions d'armature pour des systèmes composites d'isolation thermique, pour des compositions de mastics, des boues d'étanchéité et des crépis.

10. Utilisation selon les revendications 7 à 9, **caractérisée en ce que** le mortier sec comprend :
de 5 à 80 parties en poids de liant hydraulique,
de 5 à 80 parties en poids de charges,
de 0,1 à 1 partie en poids du copolymère de (méth)acrylate a),
de 0,001 à 0,5 partie en poids du dispersant b),
de 0,5 à 50 parties en poids de la poudre de redispersion c),
et éventuellement d'autres additifs.

11. Utilisation selon la revendication 10, **caractérisée en ce que** le mortier sec comprend du ciment, du gypse ou de la chaux en tant que liant hydraulique.
